# EUROPEAN PATENT SPECIFICATION

(11) **EP 0 752 578 B1**
(45) Date of publication and mention of the grant of the patent: **20.02.2002**
(21) Application number: 96201873.5
(22) Date of filing: 05.07.1996
(51) Int. Cl.: G01G 23/00, G01G 19/08

(54) **Weighing device**
Wägeeinrichtung
Dispositif de pesage

(30) Priority: 06.07.1995 NL 1000735
(43) Date of publication of application: 08.01.1997
(73) Proprietor: TERBERG MACHINES B.V., 3401 MA IJsselstein (NL)
(72) Inventor: Versteeg, Jan Paul, 6708 NL Wageningen (NL)
(74) Representative: 't Jong, Bastiaan Jacob

(56) References cited:
- EP-A- 0 452 821
- WO-A-92/11515
- BE-A- 1 004 945
- DE-A- 3 819 169
- PATENT ABSTRACTS OF JAPAN vol. 7, no. 224 (P-227) [1369] , 5 October 1983 & JP-A-58 115327 (TERAOKA SEIKOU K.K.), 9 July 1983,

## Description

The invention relates to a weighing device for determining the weight of a container with contents, which comprises: a frame; arms which are mounted tiltably on the frame and to which the container can be coupled; drive means for driving the arms; a measuring member for measuring angles of inclination of the arms relative to the horizontal as measurement data; a weighing member for weighing the weight of the container with contents to provide weighing results; and a memory for storing the weighing results, the weighing member comprises a control means.

Such a weighing device is known from DE-A-3.819.169, for instance in the embodiment of a refuse collection truck forming the frame, wherein an object is to record the quantity of refuse offered for collection by a person or company in order to pass on to the person or company the cost involved in refuse processing on the basis of this weighing data. For this purpose a container is provided with an identification element for reading by identification means of the weighing member.

In the known weighing device the measuring member for determining the angle of inclination to the horizontal is an inclinometer, wherein the arm also contains the weighing member. The weighing member is formed by a load cell, with which a reliable measurement is only performed if the container with contents is suspended substantially vertically on the load cell. The arm passes through a rotation movement, so that the inclino meter will output a signal in a predetermined weighing position of the arm in relation to the frame, on the basis of which a correction factor is calculated in a computer, which combines the correction factor and the weighing result in the predetermined weighing position into the weighing data, which are thereafter recorded in the memory. The measurement data function as a correction signal for calculating the weighing data from the weighing results, so that only calculated, corrected weighing data are recorded in memory.

A disadvantage of such a configuration is, that as a result of the rotational movement of the arms and the range, in which the weight of a container can vary, in combination of the characteristics of the load cell, the signal indicating the weighing result from the load cell is in a non-linear manner dependent from the position of the arms. Therefore a correction of the weighing results in the predetermined weighing position is sensitive, potentially unreliable and at least very sensitive to minor variations.

The invention has for its object to obviate the above mentioned drawback and provides for this purpose a weighing device which is distinguished in that the control means determines, subject to the measurement data, the positions of the arms which are optimal for weighing, and records weighing results obtained in these optimal positions of the arms directly into said memory.

In the case of an inclinometer placed on the arm, like in the prior art, the signal coming herefrom can serve directly as switch signal for storing weighing results and optionally also identification data in the memory. In the case of an inclinometer according to the invention mounted to the frame it is necessary that a computer unit calculates the angle of the arm relative to the frame wherein the weighing is reliable, i.e. compensated for an inclination of the frame, since the inclinometer only transmits data relating to the position of the frame relative to the horizontal.

The invention will be further elucidated in the following description in which reference is made to the annexed drawings, in which:
- Figure 1: shows a perspective view of a weighing device according to the present invention; and
- Figure 2: shows a schematic view of a first embodiment of a weighing device according to the present invention.

In the figures the same components are referred to with the same reference numerals.

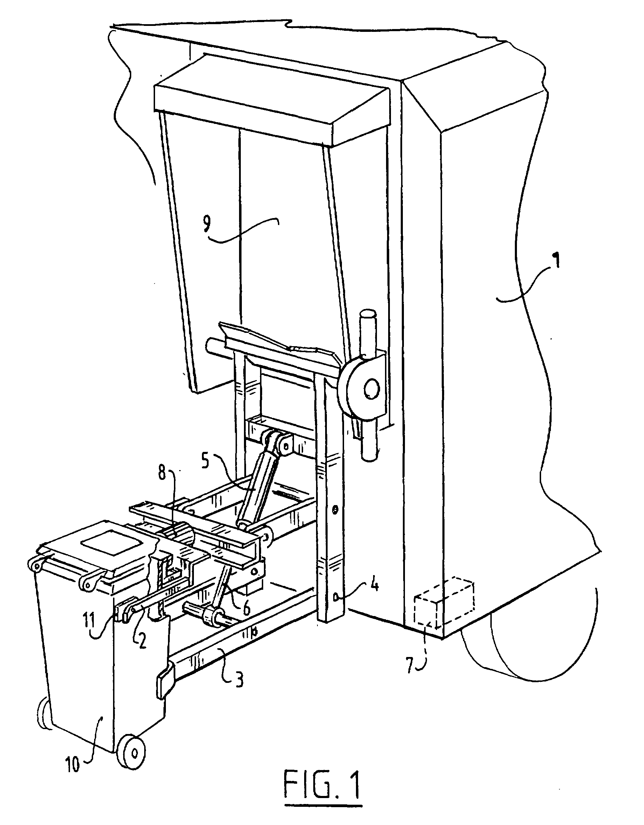

The weighing device shown in fig. 1 comprises a frame 1 designed as refuse collection truck 1, an arm 3 mounted tiltably on refuse collection truck 1, a pull rod mounted on arm 3 and truck 1 and formed by cylinder 5 and piston 6, a measuring member designed as inclinometer 7 and a weighing member designed as load cell 8.

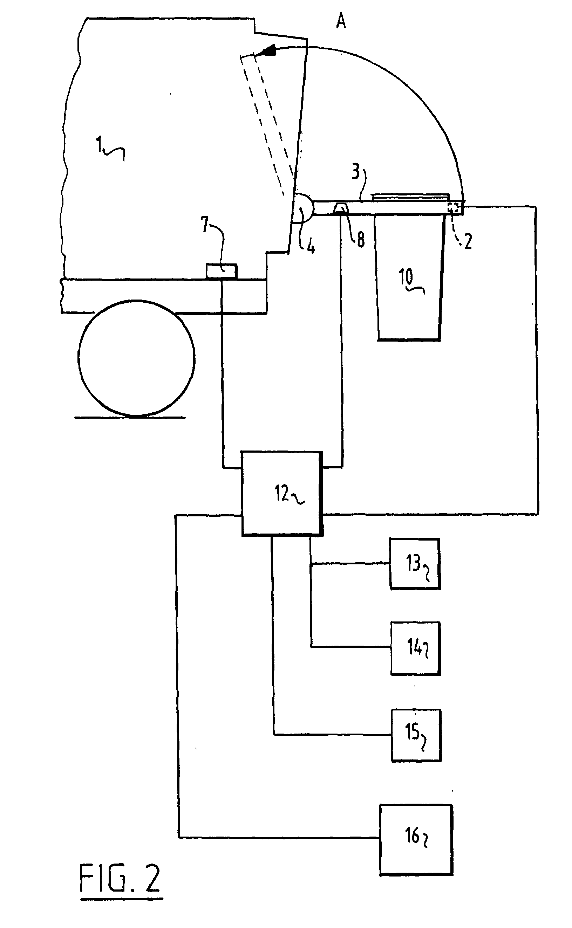

In operation the refuse collection truck functions as follows. A container 10 with contents, such as refuse or waste paper, is coupled to the arm 3, whereafter the pull rod is set into operation such that piston 6 is moved into the cylinder 5 thereof so that arm 3 moves round the tilting point 4. The container 10 is therefore moved with the top side thereof to the tipping opening 9 and is there emptied, which is designated in figure 2 with arrow A.

The container 10 is weighed continuously by the load cell 8 wherein only the weighing data from the load cell 8 is used which is obtained at a position of arm 3 and container 10 such that container 10 is suspended exactly vertically on the load cell.

This determination of the weighing point is particularly important when refuse collection truck 1 is used on a slope when emptying a container 10 into tipping opening 9. Herein a part of the rotation movement of arm 3 must first be made before weighing data from the load cell 8 can be deemed reliable.

The refuse collection truck 1 shown in this fig. 1 also contains a sensor 2 forming the identification means, which sensor 2 reads the identification data present on an identification plate 11 on container 10 for use together with the weighing data.

The embodiment of a weighing device according to the present invention shown in fig. 2 further comprises: a computer unit 12 forming the control; a logbook memory 13 forming a second memory; a monitor 14 forming an alarm; an account memory 15 forming the first memory; and an arm drive 16 forming drive means for the arm 3.

The computer unit 12 receives measurement data from the inclinometer 7 relating to the inclination of the refuse collection truck 1 and determines herefrom the relative position of the arm 3, wherein weighing data from load cell 8 relating to the weight of container 10 is reliable. This information is either transmitted to arm drive 16 in order to move arm 3 to the desired relative position in relation to truck 1 or is compared to data from arm drive 16 relating to the actual position of arm 3. In both cases the weighing data from load cell 8 together with the identification data from sensor 2 are only transmitted to the account memory 15 when arm 3 has reached the desired relative position. Weighing data associated with other relative positions of the arm 3 are not accepted by the computer unit 12 and this non-reliable weighing data is therefore lost. Only reliable weighing data is stored in the account memory 15 in combination with the identification data, so that payment takes place on the basis of correct data.

A weighing device according to the present invention is preferably also provided with the logbook memory 13 and the monitor 14. The logbook memory 13 is suitable for storing therein of data relating to the successive operational modes of the weighing device.

This data comprises a wide diversity of possibly relevant information, such as the route covered by the refuse collection truck 1, the number of stops, the number of containers emptied, the number of error messages, descriptions of error messages etc.

The monitor 14 is particularly intended to inform the person operating the weighing device of error messages and to provide information relating to the nature of the error message. The computer circuit is suitable for detecting such errors and making them known by means of the monitor. It is not desirable in the embodiment of a refuse collection truck that non-identifiable containers 10 are emptied into the refuse collection truck 1, since an account for processing the refuse offered for collection cannot then be addressed. Another possible error message is that the weight of the container 10 with contents is too large to enable weighing within the weighing range of the load cell. It will be apparent that many types of error message are possible. The weighing device according to the present invention can further contain other means as alarm, for instance a hooter, a flashing light or the like to make the person operating the weighing device aware that an error has occurred.

The above described arrangement of an embodiment of the invention is suitable for collecting reliable data, in particular when the weighing device is placed against a slope in longitudinal direction of the arm 3. However, when the weighing device is standing on a transverse slope the computer unit 12 will not transmit weighing data or identification data to the account memory 15 and will prevent container 10 from being emptied.

In an alternative embodiment of a weighing device according to the present invention arms 3 placed in transverse direction on either side of container 10 can be driven separately, so that compensation can be made for a transverse slope. As a result hereof weighing of the container 10, storage of weighing data and identification data in the account memory 15 and emptying of the container will take place regardless of the slope on which the weighing device is standing.

In an embodiment of the weighing device according to the invention not shown here, the weighing device contains a lifting device to move the or each arm separately or jointly upward before weighing commences. With such a lifting device compensation can also be made for a transverse slope. It can also be made possible that space is created to tilt the or each arm 3 in downward direction in order to obtain the relative position in relation to the frame desired for a reliable weighing. This pertains in this case to a tilting movement opposed to the direction of movement designated with arrow A, i.e. in downward direction, for which no space is available in the embodiment shown in fig. 2.

## Claims

1. Weighing device for determining the weight of a container with contents, which comprises: a frame (1); arms (3) which are mounted tiltably on the frame and to which the container (10) can be coupled; drive means (5, 16) for driving the arms (3) ; a measuring member (7) for measuring angles of inclination of the arms (3) relative to the horizontal as measurement data; a weighing member (8) for weighing the weight of the container with contents to provide weighing results; and a memory (15) for storing the weighing results, the weighing member comprises a control means (12), **characterized in that,** the control means (12) is adapted to determine, subject to the measurement data, the position of the arms (3) which is optimal for weighing, and records weighing results obtained in this optimal position of the arms (3) directly into said memory (15).

2. Weighing device as claimed in claim 1, **characterized by** identification means for determining the origin of the container (10) as identification data, wherein the control means (12) is adapted to store in the memory (15) the weighing results obtained in the optimal position and the identification data.

3. Weighing device as claimed in claim 1 or 2, **characterized by** an alarm (14) connected to the control means (12), wherein the control means (12) is adapted to detect errors.

4. Weighing device as claimed in claim 3, **characterized in that** the alarm (14) is formed by a monitor displaying text.

5. Weighing device as claimed in claim 3 or 4, **characterized by** a second memory (13) connected to the control means (12) for storing at least detected errors.

6. Weighing device as claimed in any of the foregoing claims, **characterized in that** the control means (12) is connected to the drive means (5,16) and is adapted to actuate the drive means (5,16) subject to the determined optimum position for weighing.

7. Weighing device as claimed in any of the foregoing claims, **characterized by** a lifting device connected to the frame (1) and the arms (3) in order to raise the container (10) before the tilting movement of the arms (3) commences.

8. Weighing device as claimed in any of the foregoing claims, **characterized in that** the drive means (5,16) are adapted to move each of the arms (3) separately.

9. Weighing device as claimed in claim 8, **characterized in that** the control means (12) is adapted to separately actuate the movement of each of the arms (3) subject to the determined optimum position for weighing.

## Patentansprüche

1. Wägeeinrichtung zum Bestimmen des Gewichtes eines Behälters mit Inhalten, mit:
einem Rahmen (1); Armen (3), die schwenkbar am Rahmen befestigt sind, und an die der Behälter (10) gekoppelt werden kann; Antriebsmitteln (5, 16) zum Antreiben der Arme (3); einem Meßelement (7) zum Messen der Neigungswinkel der Arme (3) relativ zur Horizontalen als Meßdaten; einem Wiegeelement (8) zum Wiegen des Gewichtes des Behälters mit Inhalten, um Wiegeergebnisse zu schaffen; und einen Speicher (15) zum Speichern der Wiegeergebnisse, wobei das Wiegeelement eine Steuerungseinrichtung (12) aufweist,
**dadurch gekennzeichnet, daß** die Steuerungseinrichtung (12) so ausgebildet ist, daß sie als Gegenstand der Meßdaten die Position der Arme 3, welche für das Wiegen optimal ist, bestimmt, und die erhaltenen Wiegeergebnisse in dieser optimalen Position der Arme (3) direkt in dem Speicher (15) aufzeichnet.

2. Wägeeinrichtung nach Anspruch 1,
**gekennzeichnet durch** Identifikationsmittel zum Bestimmen der Herkunft des Behälters (10) als Identifikationsdaten, wobei die Steuerungseinrichtung (12) so ausgebildet ist, daß sie in dem Speicher (15) die Wiegeergebnisse, welche in der optimalen Position erhalten worden sind, und die Identifikationsdaten speichert.

3. Wägeeinrichtung nach Anspruch 1 oder 2,
**gekennzeichnet durch** eine Alarmeinrichtung (14), die mit der Steuerungseinrichtung (12) verbunden ist, wobei die Steuerungseinrichtung (12) Fehler detektieren kann.

4. Wägeeinrichtung nach Anspruch 3,
**dadurch gekennzeichnet, daß** die Alarmeinrichtung (14) durch einen Monitoranzeigetext gebildet ist.

5. Wägeeinrichtung nach Anspruch 3 oder 4,
**gekennzeichnet durch** einen zweiten Speicher (13), der mit der Steuerungseinrichtung (12) verbunden ist, um wenigstens die detektierten Fehler zu speichern.

6. Wägeeinrichtung nach einem der vorstehenden Ansprüche,
**dadurch gekennzeichnet ,daß** die Steuerungseinrichtung (12) mit den Antriebsmitteln (5, 16) verbunden ist, und so ausgebildet ist, daß sie die Antriebsmittel (5, 16) in Abhängigkeit von der bestimmten optimalen Position für das Wiegen betätigen kann.

7. Wägeeinrichtung nach einem der vorstehenden Ansprüche,
**gekennzeichnet durch** eine Hebevorrichtung, die mit dem Rahmen (1) und den Armen (3) verbunden ist, um den Behälter (10) vor dem Beginn der Schwenkbewegung der Arme (3) anzuheben.

8. Wägeeinrichtung nach einem der vorstehenden Ansprüche,
dadurch **gekennze1chnet,** daß die Antriebsmittel (5, 16) so ausgebildet sind, daß sie jeden der Arme (3) getrennt bewegen können.

9. Wägeeinrichtung nach Anspruch 8,
**dadurch gekennzeichnet, daß** die Steuerungsmittel (12) so ausgebildet sind, daß sie die Bewegung jedes der Arme (3) in Abhängigkeit von der bestimmten optimalen Wiegeposition getrennt betätigen können.

## Revendications

1. Dispositif de pesage pour déterminer le poids d'un conteneur avec un contenu, qui comprend : un châssis (1) ; des bras (3) qui sont montés de façon inclinable sur le châssis et auxquels le conteneur (10) peut être couplé; des moyens d'entraînement (5, 16) pour entraîner les bras (3) ; un élément de mesure (7) pour mesurer des angles d'inclinaison des bras (3) par rapport à l'horizontale en tant que données de mesure ; un élément de pesage (8) pour déterminer le poids du conteneur avec le contenu pour fournir des résultats de pesage et une mémoire (15) pour stocker les résultats de pesage, l'élément de pesage comprenant un moyen de commande (12), **caractérisé en ce que** le moyen de commande (12) est adapté pour déterminer, en fonction des données de mesure, la position des bras (3) qui est optimale pour le pesage, et enregistre les résultats de pesage obtenus dans cette position optimale des bras (3) directement dans ladite mémoire (15).

2. Dispositif de pesage selon la revendication 1, **caractérisé par** des moyens d'identification destinés à déterminer l'origine du conteneur (10) en tant que données d'identification, dans lequel le moyen de commande (12) est adapté pour stocker dans la mémoire (15) les résultats de pesage obtenus dans la position optimale et les données d'identification.

3. Dispositif de pesage selon la revendication 1 ou 2, **caractérisé par** une alarme (14) reliée au moyen de commande (12), dans lequel le moyen de commande (12) est adapté pour détecter des erreurs.

4. Dispositif de pesage selon la revendication 3, **caractérisé en ce que** l'alarme (14) se présente sous la forme d'un écran de présentation affichant un texte.

5. Dispositif de pesage selon la revendication 3 ou 4, **caractérisé par** une deuxième mémoire (13) reliée au moyen de commande (12) pour stocker au moins des erreurs détectées.

6. Dispositif de pesage selon l'une quelconque des revendications précédentes, **caractérisé en ce que** le moyen de commande (12) est relié aux moyens d'entraînement (5, 6) et est adapté pour actionner les moyens d'entraînement en fonction de la position optimale déterminée pour le pesage.

7. Dispositif de pesage selon l'une quelconque des revendications précédentes, **caractérisé par** un dispositif de levage relié au châssis (1) et aux bras (3) afin de soulever le conteneur (10) avant que le mouvement d'inclinaison des bras (3) ne commence.

8. Dispositif de pesage selon l'une quelconque des revendications précédentes, **caractérisé en ce que** les moyens d'entraînement (5, 6) sont adaptés pour déplacer séparément chacun des bras (3).

9. Dispositif de pesage selon la revendication 8, **caractérisé en ce que** le moyen de commande (12) est adapté pour actionner séparément le mouvement de chacun des bras (3) en fonction de la position optimale déterminée pour le pesage.
